# EUROPÄISCHE PATENTSCHRIFT

(11) **EP 3 640 773 B1**
(45) Veröffentlichungstag und Bekanntmachung des Hinweises auf die Patenterteilung: **28.12.2022**
(21) Anmeldenummer: 18200805.2
(22) Anmeldetag: 16.10.2018
(51) Int. Cl.: G06F 3/0354, G06F 3/0346, G01S 17/48, G01S 17/46, G01S 17/08, G01S 17/88

(54) **EINGABESTIFT MIT DISTANZMESSER**
INPUT PEN WITH DISTANCE METER
CRAYON DE SAISIE À TÉLÉMÈTRE

(43) Veröffentlichungstag der Anmeldung: 22.04.2020
(73) Patentinhaber: Leica Geosystems AG, 9435 Heerbrugg (CH)
(72) Erfinder: BÖCKEM, Burkhard, CH-8916 Jonen AG (CH)
(74) Vertreter: Kaminski Harmann

(56) Entgegenhaltungen:
- US-A1- 2015 212 602
- US-A1- 2017 177 189

## Beschreibung

Die Erfindung betrifft einen Eingabestift zur präzisen Bedienung eines berührungsempfindlichen Bildschirms, beispielsweise eines Smartphones oder Tablet-Computers, wobei der Eingabestift einen integrierten Laserentfernungsmesser aufweist. Die Erfindung betrifft ausserdem ein ComputerSystem mit einem berührungsempfindlichen Bildschirm und einem solchen Eingabestift.

Handgehaltene Eingabestifte (auch "Stylus" oder "Touchpen") zur präzisen Bedienung handgehaltener Kleincomputer (wie Smartphones o. ä.) über deren berührungsempfindliche Bildschirme (Touchscreens) sind im Stand der Technik hinlänglich bekannt. Die US 2015/0212602 A1 beschreibt einen solchen Eingabestift, der gleichzeitig zum optischen Erfassen von Text und Bildern verwendet werden kann.

Ebenso sind handhaltbare Entfernungsmessgeräte mit Laserentfernungsmesser bekannt, die mittels eines in einer Emissionsrichtung emittierten Laserstrahls und der Laufzeitmethode zum Messen von Entfernungen zu Punkten im Raum ausgestaltet sind. Derartige Entfernungsmesser werden zum Beispiel in der EP 2 669 707 A1 oder der EP 2 918 972 A2 beschrieben.

Ein als Eingabestift verwendbares Gerät mit einer Distanzmessfunktionalität ist in der US 2017/0177189 A1 offenbart.

Es ist auch bekannt, dass solche Entfernungsmessgeräte ihre Messdaten an Computer übermitteln können, wo diese Daten beispielsweise zum Berechnen von Raummodellen verwendet werden können. Tragbare Computer wie Smartphones oder Tablet-Computer ermöglichen dies direkt am Ort der Messung. Es ist allerdings unpraktisch, mehrere Geräte zu diesem Zweck mit sich herumzutragen.

Es ist eine Aufgabe der vorliegenden Erfindung, ein verbessertes System aus Entfernungsmesser und Computer, insbesondere Smartphone, bereitzustellen.

Eine weitere Aufgabe ist es, ein solches System bereitzustellen, dass eine einfache Bedienung durch einen Benutzer erlaubt.

Eine weitere Aufgabe ist es, ein solches System bereitzustellen, das sowohl während einer Entfernungsmessung als auch während einer Eingabe von Daten in den Computer durch einen Benutzer handhaltbar ist.

Eine weitere Aufgabe ist es, auf einfache Art und Weise für bestehende handgehaltene Geräte eine Entfernungsmessfunktionalität bereitzustellen.

Mindestens eine dieser Aufgaben wird durch die Verwirklichung der kennzeichnenden Merkmale des unabhängigen Anspruchs gelöst. Vorteilhafte Ausgestaltungen der Erfindung finden sich dabei in den abhängigen Ansprüchen.

Ein erfindungsgemässes Computersystem weist einen Computer mit einem berührungsempfindlichen Bildschirm und einen handhaltbaren Eingabestift zur präzisen Bedienung des berührungsempfindlichen Bildschirms auf, wobei der Eingabestift dazu ausgestaltet ist, Funktionen des Computers mittels Berühren des Bildschirms zu steuern, ein längliches Gehäuse aufweist, das derart ausgestaltet ist, dass der Eingabestift zum einhändigen schreibstiftartigen Gehaltenwerden vorgesehen ist, und eine Spitze, die zum Berühren des Bildschirms ausgestaltet ist.

Erfindungsgemäss weist der Eingabestift einen in das Gehäuse integrierten Laserentfernungsmesser zum Messen von Entfernungen zu Raumpunkten entlang einer Emissionsrichtung auf. Der Computer und der Eingabestift sind dabei erfindungsgemäss zur Übertragung von Daten über gemessene Entfernungen von dem Eingabestift an den Computer per Funk ausgestaltet.

Das Computersystems ist dazu konfiguriert, bei einem sich in der Aufnahme befindlichen Eingabestift einen ersten und einen zweiten Entfernungsmessmodus selektierbar bereitzustellen, wobei bei Selektion des ersten Entfernungsmessmodus beim Auslösen einer Entfernungsmessung eine Entfernung von einer ersten Gehäusekante des Computers zu einem Raumpunkt mittels des Entfernungsmessers des Eingabestifts gemessen wird, und bei Selektion des zweiten Entfernungsmessmodus beim Auslösen einer Entfernungsmessung eine Entfernung von einer der ersten Gehäusekante gegenüberliegenden zweiten Gehäusekante des Computers zu einem Raumpunkt mittels des Entfernungsmessers des Eingabestifts gemessen wird. Der Computer weist mindestens einen Schalter zum Auslösen einer Entfernungsmessung auf, insbesondere wobei sich der Schalter am Gehäuse des Computers befindet, oder der Bildschirm einen virtuellen Schalter bereitstellt.

Gemäss einer Ausführungsform des Computersystems weist das Gehäuse des Eingabestifts einen Greifbereich für zumindest Daumen und Zeigefinger, sowie insbesondere auch Mittelfinger, eines Benutzers auf.

Gemäss einer weiteren Ausführungsform definiert das Gehäuse des Eingabestifts eine Gehäuselängsachse, und die Emissionsrichtung ist parallel zu dieser Gehäuselängsachse.

Der Eingabestift weist vorzugsweise zwei Enden auf, wobei sich die Spitze an einem ersten Ende des Gehäuses befindet. Gemäss einer Ausführungsform ist der Laserentfernungsmesser positioniert und dazu ausgestaltet, einen Laserstrahl an besagtem ersten Ende des Gehäuses in der Emissionsrichtung zu emittieren. Gemäss einer anderen Ausführungsform ist der Laserentfernungsmesser positioniert und dazu ausgestaltet, den Laserstrahl an einem zweiten Ende des Gehäuses in der Emissionsrichtung zu emittieren.

Gemäss einer weiteren Ausführungsform sind die Daten mittels Bluetooth übertragbar.

Gemäss einer weiteren Ausführungsform weist der Eingabestift eine Auswerteeinheit auf, die ausgestaltet ist zur Ableitung und Bereitstellung gemessener Entfernungen.

Gemäss einer weiteren Ausführungsform weist der Eingabestift eine inertiale Messeinheit auf mit Beschleunigungssensoren und Drehratensensoren.

Gemäss einer Ausführungsform ist besagte inertiale Messeinheit dazu ausgestaltet, Bewegungen des Eingabestifts zwischen einer ersten Entfernungsmessung und einer zweiten Entfernungsmessung des Laserentfernungsmessers zu erfassen, insbesondere in sechs Freiheitsgraden.

Gemäss einer Ausführungsform ist besagte Auswerteeinheit ausgestaltet zur Ableitung und Bereitstellung erfasster Bewegungen des Eingabestiftes, zur Ableitung von Posen des Eingabestiftes basierend auf den erfassten Bewegungen, zur Berechnung und Bereitstellung einer Distanz zwischen zwei durch die erste und die zweite Entfernungsmessung vermessenen Raumpunkten, und/oder zur Berechnung und Bereitstellung von Positionen in einem dreidimensionalen lokalen Koordinatensystem.

Gemäss einer weiteren Ausführungsform weist der Eingabestift eine Anzeigeeinheit zur Anzeige gemessener Entfernungen auf, insbesondere in Form einer OLED-Anzeige.

Gemäss einer weiteren Ausführungsform weist der Eingabestift eine in das Gehäuse integrierte Kameraeinheit auf zum Aufnehmen von Bildern in Richtung der Emissionsrichtung.

Gemäss einer weiteren Ausführungsform des Eingabestifts sind die Spitze und das Gehäuse leitfähig und derart ausgestaltet, dass der Eingabestift zur Bedienung eines als kapazitiver Touchscreen ausgestalteten Bildschirms geeignet ist.

Gemäss einer anderen Ausführungsform weist der Eingabestift eine Spule auf und ist zur Bedienung eines als induktiver Touchscreen ausgestalteten Bildschirms geeignet.

Gemäss einer Ausführungsform des Computersystems ist der Computer handhaltbar ausgestaltet, wobei der Bildschirm in ein Gehäuse des Computers integriert ist. Der handhaltbare Computer kann insbesondere als ein Smartphone oder Tablet PC ausgestaltet sein.

Gemäss einer weiteren Ausführungsform des Computersystems sind der Computer und der Eingabestift zur wechselseitigen Übertragung von Anweisungen von dem Eingabestift an den Computer und von dem Computer an den Eingabestift per Funk ausgestaltet, wobei das Gehäuse des Eingabestifts einen Auflagebereich zur stabilen Auflage des Stiftes auf einer Fläche, insbesondere einen magnetischen Auflagebereich zur Fixierung des Eingabestiftes an magnetischen Flächen aufweisen kann, und der Bildschirm einen virtuellen Schalter zum Auslösen einer Entfernungsmessung bereitstellen kann.

Eine Anweisung kann beispielweise die Auslösung einer Entfernungsmessung sein oder die Auslösung der Aufnahme eines oder mehrerer Bilder mittels der Kameraeinheit. Dadurch kann es einem Benutzer ermöglicht werden den Eingabestift ausser Reichweite zur manuellen Bedienung oder ohne die Notwendigkeit des Handhaltens für eine Entfernungsmessung zu positionieren und die Entfernungsmessung mittels Betätigung des virtuellen Schalters am Bildschirm auszulösen.

Gemäss einer weiteren Ausführungsform des Computersystems weist der Eingabestift eine Kameraeinheit zur Aufnahme von Bildern auf, und der Computer und der Eingabestift sind zur Übertragung von Bilddaten von von der Kameraeinheit aufgenommenen Bildern von dem Eingabestift an den Computer per Funk ausgestaltet. Dabei kann das Computersystem dazu konfiguriert sein kann, aufgenommene Bilddaten als Bilder auf dem Bildschirm darzustellen.

In diesem Zusammenhang kann eine Anweisung auch die Auslösung einer Bildaufnahme und deren Übertragung sein, insbesondere einer kontinuierlichen Bildübertragung, beispielsweise in der Form eines Video-Streams. Das aufgenommene Bild oder der Video-Stream kann es dem Benutzer beispielsweise erlauben, den zur Entfernungsmessung angezielten Raumpunkt auf dem Bildschirm darzustellen, insbesondere in einer im Vergleich zur Wahrnehmung mit dem blossen Auge vergrösserten Darstellung.

Gemäss einer weiteren Ausführungsform des Computersystems kann der Eingabestift ein haptisches Feedback-Modul aufweisen, und das Computersystem dazu konfiguriert sein, eine erfolgreiche Übertragung von Daten betreffend eine gemessene Entfernung von dem Eingabestift an den Computer per Funk mittels des haptischen Feedback-Moduls haptisch zu signalisieren.

Die erste und die zweite Gehäusekante sind in einer Ausführungsform grob rechtwinklig zur Emissionsrichtung an jeweils dem ersten oder zweiten Ende des Eingabestifts angeordnet.

Das erfindungsgemässe Computersystem wird nachfolgend anhand von in den Figuren schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste beispielhafte Ausführungsform eines Eingabestifts und ein Smartphone mit einem Touchscreen;
- Fig. 2: eine Verwendung des Eingabestifts aus Figur 1 zur Bedienung des Touchscreens; und
- Fig. 3: eine zweite beispielhafte Ausführungsform eines Eingabestifts;
- Fig. 4: eine Verwendung des Eingabestifts zum Messen und Ableiten von Entfernungen;
- Fig. 5: ein System aus Eingabestift und handhaltbarem Computer; und
- Fig. 6: einen Längsschnitt durch eine beispielhafte Ausführungsform eines Eingabestifts.

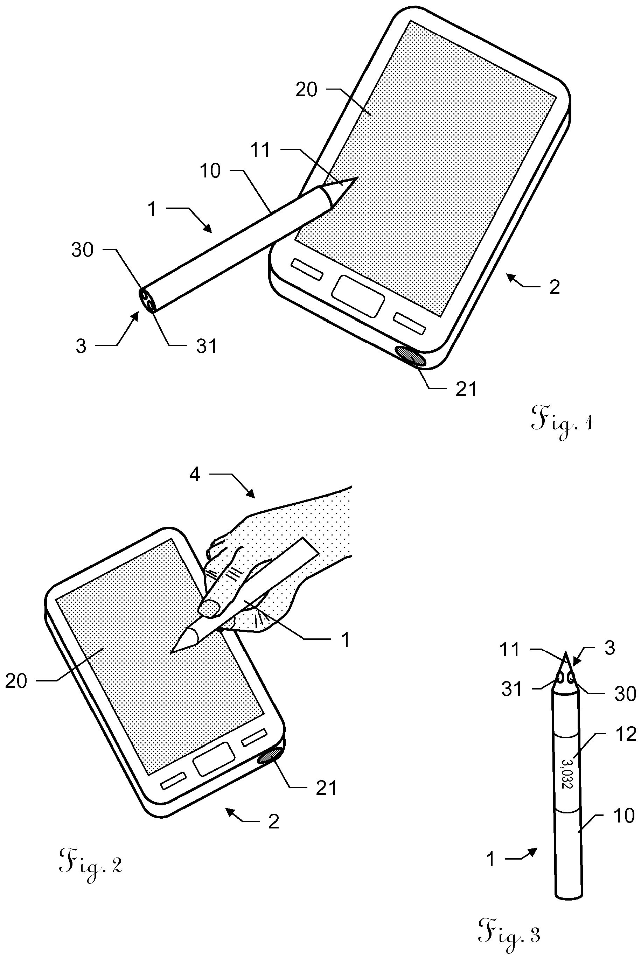

Figur 1 zeigt eine erste beispielhafte Ausführungsform eines Eingabestifts 1. Dieser weist ein längliches Gehäuse 10 auf, an dessen einem Ende sich eine Spitze 11 befindet, die ausgestaltet ist zur Bedienung eines berührungsempfindlichen Bildschirms 20 (Touchscreen) eines als Smartphone 2 ausgestalteten handhaltbaren Computers zur Steuerung von Funktionen des Computers. Das Gehäuse 10 kann beispielsweise aus einem harten Kunststoff und die Spitze 11 aus einem weicheren Kunststoff bestehen. Während das Gehäuse dadurch hart und griffest ist, ist die Spitze 11 dazu ausgelegt, den Bildschirm 20 möglichst schonend zu berühren, insbesondere ohne jede Gefahr Kratzer zu erzeugen.

Am der Spitze 11 gegenüberliegenden Ende ist in das Gehäuse 10 ein Laserentfernungsmesser 3 integriert mit einem Laseraussendemodul 30, das dazu ausgestaltet ist, einen Messstrahl auf einen Messpunkt zu emittieren (hier nicht dargestellt), und einer Empfangsoptik 31 zum Empfangen von von dem Messpunkt zurückgestreuter Messtrahlung. Eingabestift 1 und Smartphone 2 können insbesondere als ein System ausgestaltet sein, wobei das Smartphone 2 eine Aufnahme 21 für den Eingabestift 1 aufweist.

Wie herkömmliche Eingabestifte kann auch der Eingabestift 1 zur Bedienung unterschiedlicher Touchscreens ausgestaltet sein. Wenn der berührungsempfindliche Bildschirm 20 als ein kapazitiver Touchscreen ausgestaltet ist, sind sowohl das Gehäuse 10 als auch die Spitze 11 des Eingabestifts 1 zumindest teilweise leitfähig ausgestaltet. Handelt es sich um einen induktiven Touchscreen, ist in den Eingabestift 1 eine entsprechende Spule integriert. Für die Verwendung mit resistiven Touchscreens sind keine besonderen Komponenten erforderlich; die Spitze kann vorzugsweise gummiert sein.

Figur 2 zeigt den Eingabestift 1 und das Smartphone 2 aus Figur 1 bei der Verwendung des Eingabestifts 1 zur Bedienung des Bildschirms 20 des Smartphones 2. Das Gehäuse des Stifts 1 ist derart ausgestaltet, dass dieser mit einer Hand 4 eines Benutzers schreibstiftartig gehalten werden kann. Vorzugsweise weist der Stift 1 an seinem Gehäuse dazu einen speziell gestalteten Greifbereich für zumindest Daumen und Zeigefinger, und insbesondere auch den Mittelfinger, der Hand 4 auf.

Vorteilhaft ist mit Eingabestiften allgemein eine präzisere Bedienung als mit den Fingern möglich, beispielsweise können pixelgenaue Zeichnungen erstellt werden. Ausserdem können Eingabestifte zum Erstellen von handschriftlichen Notizen verwendet werden. Einige Eingabestifte des Standes der Technik können auch Druck und Neigung bei der Bedienung des Touchscreens messen und die entsprechenden Werte an den Computer übertragen.

Weiterhin werden durch Verwendung des Eingabestifts 1 Verschmutzungen auf dem Bildschirm 20 durch Fingerabdrücke verhindert.

Figur 3 zeigt eine zweite beispielhafte Ausführungsform eines Eingabestifts 1. Bei diesem ist der Laserentfernungsmesser 3 mit Laseraussendemodul 30 und Empfangsoptik 31 an demselben Ende des Gehäuses 10 vorgesehen wie die Spitze 11 zum Bedienen des Bildschirms. Zusätzlich weist der Stift 1 eine Anzeigeeinheit 12 auf, insbesondere vorteilhaft zur Anzeige gemessener Entfernungen. Insbesondere wenn das Gehäuse 10 rund ist und damit die darauf angebrachte Anzeigeeinheit 12 ebenso, ist die Anzeigeeinheit 12 vorzugsweise als OLED-Anzeige (OLED = organische Leuchtdiode) ausgestaltet.

Um gemessene Entfernungen anzeigen zu können, weist der Eingabestift 1 eine dem Laserentfernungsmesser 3 zugeordnete Auswerteeinheit auf, die zur Ableitung und Bereitstellung der mittels des Laserentfernungsmessers 3 gemessenen Entfernungen ausgestaltet ist.

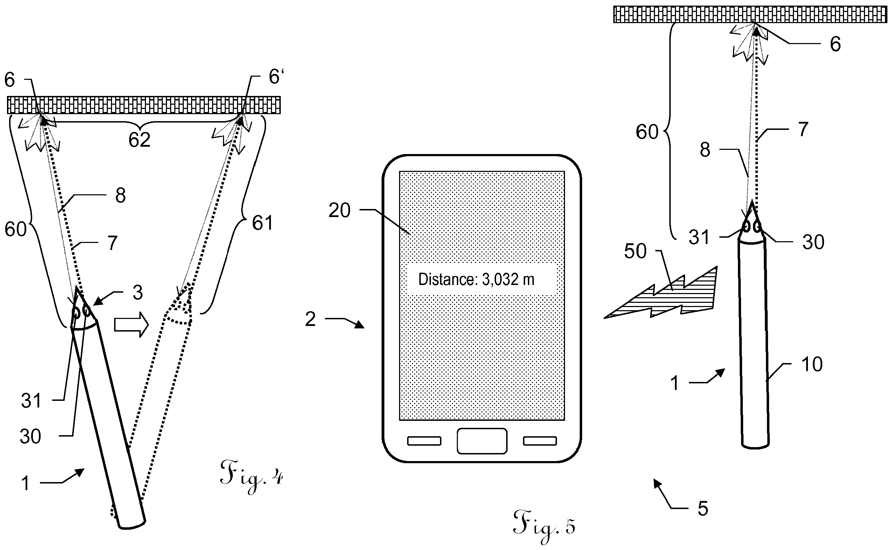

Figur 4 illustriert die Verwendung des Eingabestifts 1 zur Entfernungsmessung mittels des Laserentfernungsmessers 3. Der Laserentfernungsmesser 3 weist eine Laseraussendeeinheit 30 und eine Laserempfangseinheit 31 auf, die über optische Öffnungen im Gehäuse des Eingabestifts 1 verfügen. Alternativ kann der Laserentfernungsmesser 3 auch eine koaxiale Optik aufweisen, also eine gemeinsame Öffnung zum Aussenden und Empfangen des Messstrahlung, was insbesondere aufgrund der zur Unterbringung im Eingabestift notwendigerweise kompakten Bauweise vorteilhaft sein kann.

Zum Auslösen einer Entfernungsmessung durch den Benutzer weist der Eingabestift 1 entsprechende Schalter auf, die vorzugsweise so positioniert sind, dass sie bei einer schreibstiftartigen Haltung des Eingabestifts 1 während der Verwendung als Eingabemittel nicht versehentlich bedient werden.

Die Laseraussendeeinheit 30 sendet einen Laserstrahl 7 als Messstrahlung zu einem Messpunkt 6 auf einer Wand aus, und erzeugt dort vorzugsweise einen sichtbaren Punkt. Die Wand weist eine natürlich rauhe Oberfläche auf, von der optische Strahlen streuend reflektiert werden. Ein Teil der gestreut reflektierten Strahlen 8 des Laserstrahls 7 wird von der Laserempfangseinheit 31 eingesammelt, detektiert und in ein elektrisches Signal umgewandelt. Das Signal wird in an sich bekannter Weise zum Bestimmen des digitalen Werts der Distanz 60 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 31 und einem Messanschlag berücksichtigt. Der durch die Auswertung digital bestimmte Wert der gemessenen Entfernung 60 kann dann beispielsweise durch eine Anzeigeeinheit (hier nicht dargestellt) einem Benutzer zur Verfügung gestellt werden.

Der Eingabestift 1 ist beim Messen einer Entfernung 60 zu einem ersten Punkt 6 und einer Entfernung 61 zu einem zweiten Punkt 6' an einer Wand gezeigt. Für die Messung zum zweiten Punkt 6' wird die Lage des Eingabestifts 1 gegenüber der Messung zum ersten Punkt 6 durch den Benutzer geändert. Ist die Lageveränderung zusätzlich zu den Entfernungen 60, 61 zu den beiden Messpunkten 6, 6' erfassbar, kann eine Entfernung 62 zwischen den beiden Punkten 6, 6' berechnet werden. Zur Ermittlung der Lageveränderung in sechs Freiheitsgraden kann der Eingabestift 1 insbesondere eine inertiale Messeinheit mit Beschleunigungs- und Drehratensensoren aufweisen.

Figur 5 zeigt ein System 5 aus Eingabestift 1 und Computereinheit 2. Diese sind jeweils zur gegenseitigen Datenübertragung 50 ausgestaltet. Insbesondere können Daten über gemessene Entfernungen 60 - entweder als Rohdaten oder bereits als abgeleitete Entfernungswerte - von dem Eingabestift 1 an den Computer 2 übertragen werden. Die Übertragung 50 kann wie hier dargestellt kabellos erfolgen, beispielsweise mittels Bluetooth, Nahfeldkommunikation oder ein WLAN-Netzwerk. Ebenso kann die Datenübertragung aber auch mittels USB-Kabel erfolgen, über welches dann auch eine Stromversorgung des Laserentfernungsmessers 3 sichergestellt werden kann. Die gemessene Entfernung 60 zu dem Messpunkt 6 kann dem Benutzer dann auf dem Bildschirm 20 des Computers 2 angezeigt werden.

Mittels des Eingabestifts 1 können Entfernungen in ein Raummodell oder einen Bauplan eingefügt werden, beispielsweise bestimmten Strecken zugeordnet. Auch kann ein solches Raummodell oder ein solcher Bauplan direkt auf dem Gerät erstellt werden, wie beispielsweise in den beiden Dokumenten US 2005/0140677 A1 oder EP 2 618 105 B1 beschrieben. Längenangaben für einzelne Segmente können dann mit dem Eingabestift sowohl ermittelt als auch zugeordnet werden.

Die kabellose Übertragung 50 kann auch eine wechselseitige Übertragung von Anweisungen zwischen Eingabestift 1 und Computer 2 beinhalten. Der Bildschirm kann dazu einen virtuellen Schalter zum Auslösen einer Entfernungsmessung bereitstellen. So kann beispielsweise ein Benutzer eine Entfernungsmessung am Computer 2 auslösen, während der Eingabestift 1 ausser Reichweite des Benutzers auf einer Fläche abgelegt oder an einer Wand befestigt ist. Vorzugsweise kann der Eingabestift dabei über einen Auflagebereich zur stabilen Auflage auf einer Fläche oder auch einen magnetischen Auflagebereich zur Fixierung des Eingabestiftes an magnetischen Flächen aufweisen.

Optional kann der Eingabestift 1 eine Kameraeinheit zur Aufnahme von Bildern aufweisen (hier nicht dargestellt). Die kabellose Übertragung 50 kann in diesem Fall eine Übertragung von Bilddaten von den von der Kameraeinheit aufgenommenen Bildern von dem Eingabestift 1 an den Computer 2 umfassen. Die aufgenommenen Bilddaten können anschliessend als Bilder auf dem Bildschirm dargestellt werden.

Weiterhin kann der Eingabestift 1 ein haptisches Feedback-Modul aufweisen, dass ein haptisches Feedback für einen Benutzer des Eingabestifts ermöglicht, beispielsweise in Form eines Vibrationsalarms. In diesem Fall kann die kabellose Übertragung 50 ein Signal von dem Computer 2 an den Eingabestift 1 umfassen, das haptische Feedback auszulösen. Beispielsweise kann so eine erfolgreiche Übertragung 50 von Daten betreffend eine gemessene Entfernung von dem Eingabestift 1 an den Computer 2 signalisiert werden.

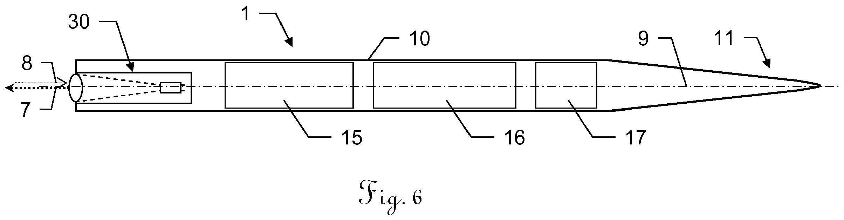

Figur 6 zeigt einen Längsschnitt durch eine beispielhafte Ausführungsform des Eingabestifts 1 zur Illustration interner Komponenten. In der gezeigten Ausführungsform liegt der Laserentfernungsmesser 3 auf der der Spitze 11 gegenüberliegenden Seite des Stiftes. Das längliche Gehäuse 10 des Stiftes definiert eine Längsachse 9. Der Laserentfernungsmesser 3 ist derart positioniert und ausgestaltet, dass die Emissionsrichtung der Messstrahlung 7 parallel zu der Gehäuselängsachse 9 ist. Der Stift weist eine Taste 35 zum Auslösen einer Entfernungsmessung auf.

Im Innern des Gehäuses 10 sind beispielhaft eine Datenübertragungseinheit 15, eine Auswerteeinheit 16 und eine inertiale Messeinheit 17 dargestellt.

Ausserdem weist der Stift eine Stromversorgungseinheit auf, insbesondere mit einem Akku und einem Anschluss zum Aufladen desselben (hier nicht dargestellt). Das Aufladen kann beispielsweise mittels USB-Kabel erfolgen. Alternativ kann der Akku des Stiftes 1 über elektrische Kontakte im Gehäuse 10 oder mittels Induktion aufgeladen werden, wenn er in eine Aufnahme 21 (vgl. Figur 1) eines beispielsweise als Smartphone ausgestalteten Computers eingefügt ist. Alternativ kann auch ein Batteriefach vorgesehen sein.

Die Datenübertragungseinheit 15 ist zur Übertragung von Daten per Funk an einen externen Computer ausgestaltet, insbesondere mittels Bluetooth. Die Auswerteeinheit 16 ist ausgestaltet zur Ableitung und Bereitstellung gemessener Entfernungen, beispielsweise für eine Anzeigeeinheit des Stiftes 1 (vgl. Figur 3). Die inertiale Messeinheit 17 weist Beschleunigungs- und Drehratensensoren auf und ist insbesondere dazu ausgestaltet, Bewegungen des Eingabestifts 1 zwischen einer ersten Entfernungsmessung und einer zweiten Entfernungsmessung des Laserentfernungsmessers 30 in sechs Freiheitsgraden zu erfassen.

Das Computersystem ist dazu konfiguriert, Entfernungsmessungen auch dann durchzuführen, wenn der Eingabestift 1 in die Aufnahme 21 des handgehaltenen Computers 2 eingeführt ist (vgl. Figur 1). Dazu weist der Computer 2 Mittel zum Auslösen einer Entfernungsmessung auf, beispielsweise in Form eines Schalters am Gehäuse des Computers oder in Form eines virtuellen Schalters, der auf dem Bildschirm bereitgestellt wird. In diesem Fall können vorteilhaft zwei Entfernungsmessmodi für einen Benutzer selektierbar bereitgestellt werden. Bei Selektion des ersten Entfernungsmessmodus kann beim Auslösen einer Entfernungsmessung mittels des Entfernungsmessers des Eingabestifts 1 eine Entfernung von einer ersten Gehäusekante des Computers 2 zu einem Raumpunkt gemessen werden, das heisst von der Kante des Computers, an welcher sich die Aufnahme befindet. Bei Selektion des zweiten Entfernungsmessmodus kann mittels des Entfernungsmessers des Eingabestifts 1 eine Entfernung von einer der ersten Gehäusekante gegenüberliegenden zweiten Gehäusekante des Computers 2 zu einem Raumpunkt gemessen werden. Insbesondere kann dabei eine bekannte Länge des Computers 2 zwischen der ersten und der zweiten Kante zur Entfernungsmessung hinzuaddiert werden.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Computersystem (5), aufweisend einen Computer (2) mit einem berührungsempfindlichen Bildschirm (20) und einen handhaltbaren Eingabestift (1) zur präzisen Bedienung des berührungsempfindlichen Bildschirms (20), wobei der Eingabestift (1)
- dazu ausgestaltet ist, Funktionen des Computers (2) mittels Berühren des Bildschirms (20) zu steuern,
- ein längliches Gehäuse (10) aufweist, das derart ausgestaltet ist, dass der Eingabestift (1) zum einhändigen schreibstiftartigen Gehaltenwerden vorgesehen ist, und
- eine Spitze (11) aufweist, die zum Berühren des Bildschirms (20) ausgestaltet ist,
wobei der Computer (2) eine Aufnahme (21) für den Eingabestift (1) aufweist,
**dadurch gekennzeichnet, dass**
- der Eingabestift (1) einen in das Gehäuse (10) integrierten Laserentfernungsmesser (30) aufweist zum Messen von Entfernungen zu Raumpunkten (6) entlang einer Emissionsrichtung,
- der Computer (2) und der Eingabestift (1) zur Übertragung (50) von Daten über gemessene Entfernungen von dem Eingabestift (1) an den Computer (2) per Funk ausgestaltet sind, und
- das Computersystem (5) dazu konfiguriert ist, bei dem Eingabestift (1), wenn sich dieser in der Aufnahme (21) befindet, einen ersten und einen zweiten Entfernungsmessmodus selektierbar bereitzustellen,
wobei
- bei Selektion des ersten Entfernungsmessmodus beim Auslösen einer Entfernungsmessung eine Entfernung von einer ersten Gehäusekante des Computers (2) zu einem Raumpunkt mittels des Entfernungsmessers des Eingabestifts (1) gemessen wird, und
- bei Selektion des zweiten Entfernungsmessmodus beim Auslösen einer Entfernungsmessung eine Entfernung von einer der ersten Gehäusekante gegenüberliegenden zweiten Gehäusekante des Computers (2) zu einem Raumpunkt mittels des Entfernungsmessers des Eingabestifts (1) gemessen wird, und
- der Computer (2) mindestens einen Schalter zum Auslösen einer Entfernungsmessung aufweist, insbesondere wobei sich der Schalter am Gehäuse des Computers befindet oder der Bildschirm (20) einen virtuellen Schalter bereitstellt.

2. Computersystem (5) nach Anspruch 1,
wobei das Gehäuse (10) des Eingabestifts (1) einen Greifbereich für zumindest Daumen und Zeigefinger, sowie insbesondere auch Mittelfinger, eines Benutzers aufweist.

3. Computersystem (5) nach Anspruch 1 oder Anspruch 2, wobei das Gehäuse (10) des Eingabestifts (1) eine Gehäuselängsachse (9) definiert, und die Emissionsrichtung parallel zur Gehäuselängsachse (9) ist, wobei die Spitze (11) sich an einem ersten Ende des Gehäuses (10) befindet.

4. Computersystem (5) nach Anspruch 3,
wobei der Laserentfernungsmesser (30) positioniert und dazu ausgestaltet ist, einen Laserstrahl (7) an dem ersten Ende des Gehäuses in der Emissionsrichtung zu emittieren.

5. Computersystem (5) nach Anspruch 3,
wobei der Laserentfernungsmesser (30) positioniert und dazu ausgestaltet ist, einen Laserstrahl (7) an einem zweiten Ende des Gehäuses (10) in der Emissionsrichtung zu emittieren.

6. Computersystem (5) nach einem der vorangehenden Ansprüche,
wobei der Eingabestift (1) eine Auswerteeinheit (16) aufweist, die ausgestaltet ist zur Ableitung und Bereitstellung gemessener Entfernungen.

7. Computersystem (5) nach einem der vorangehenden Ansprüche,
wobei der Eingabestift (1) eine inertiale Messeinheit (17) aufweist, aufweisend Beschleunigungssensoren und Drehratensensoren, wobei die inertiale Messeinheit (17) dazu ausgestaltet ist, Bewegungen des Eingabestifts (1) zwischen einer ersten Entfernungsmessung und einer zweiten Entfernungsmessung des Laserentfernungsmessers (30) zu erfassen, insbesondere in sechs Freiheitsgraden,
insbesondere wobei der Eingabestift (1) eine Auswerteeinheit (16) aufweist, die ausgestaltet ist zur Ableitung und Bereitstellung gemessener Entfernungen, sowie
- zur Ableitung und Bereitstellung erfasster Bewegungen des Eingabestiftes (1),
- zur Ableitung von Posen des Eingabestiftes (1) basierend auf den erfassten Bewegungen,
- zur Berechnung und Bereitstellung einer Distanz zwischen zwei durch die erste und die zweite Entfernungsmessung vermessenen Raumpunkten, und/oder
- zur Berechnung und Bereitstellung von Positionen in einem dreidimensionalen lokalen Koordinatensystem.

8. Computersystem (5) nach einem der vorangehenden Ansprüche,
wobei der Eingabestift (1) eine Anzeigeeinheit (12) zur Anzeige gemessener Entfernungen aufweist, insbesondere in Form einer OLED-Anzeige.

9. Computersystem (5) nach einem der vorangehenden Ansprüche,
wobei der Eingabestift (1) eine in das Gehäuse (10) integrierte Kameraeinheit zum Aufnehmen von Bildern in Richtung der Emissionsrichtung aufweist.

10. Computersystem (5) nach einem der vorangehenden Ansprüche,
wobei die Spitze (11) und das Gehäuse (10) des Eingabestifts (1) leitfähig sind und derart ausgestaltet, dass der Eingabestift (1) zur Bedienung eines als kapazitiver Touchscreen ausgestalteten Bildschirms (20) geeignet ist.

11. Computersystem (5) nach einem der Ansprüche 1 bis 9, wobei der Eingabestift (1) eine Spule aufweist und zur Bedienung eines als induktiver Touchscreen ausgestalteten Bildschirms (20) geeignet ist.

12. Computersystem (5) nach einem der vorangehenden Ansprüche,
wobei der Computer (2) handhaltbar ausgestaltet ist,
wobei der Bildschirm (20) in ein Gehäuse des Computers (2) integriert ist, insbesondere wobei der Computer (2) als ein Smartphone oder Tablet PC ausgestaltet ist.

13. Computersystem (5) nach einem der vorangehenden Ansprüche,
wobei der Computer (2) und der Eingabestift (1) zur wechselseitigen Übertragung (50) von Anweisungen per Funk ausgestaltet sind, wobei
- das Gehäuse des Eingabestifts (1) einen Auflagebereich zur stabilen Auflage des Stiftes auf einer Fläche, insbesondere einen magnetischen Auflagebereich zur Fixierung des Eingabestiftes an magnetischen Flächen, aufweist, und
- der Bildschirm einen virtuellen Schalter zum Auslösen einer Entfernungsmessung bereitstellt.

14. Computersystem (5) nach einem der vorangehenden Ansprüche, wobei
- der Eingabestift (1) eine Kameraeinheit zur Aufnahme von Bildern aufweist,
- der Computer (2) und der Eingabestift (1) zur Übertragung (50) von Bilddaten von von der Kameraeinheit aufgenommenen Bildern von dem Eingabestift (1) an den Computer (2) per Funk ausgestaltet sind, und
- das Computersystem (5) dazu konfiguriert ist, aufgenommene Bilddaten als Bilder auf dem Bildschirm darzustellen.

15. Computersystem (5) nach einem der vorangehenden Ansprüche,
wobei der Eingabestift (1) ein haptisches Feedback-Modul aufweist, und das Computersystem (5) dazu konfiguriert ist, eine erfolgreiche Übertragung (50) von Daten betreffend eine gemessene Entfernung von dem Eingabestift (1) an den Computer (2) per Funk mittels des haptischen Feedback-Moduls haptisch zu signalisieren.

## Claims

1. Computer system (5) comprising a computer (2) with a touch-sensitive display (20) and a handheld stylus (1) for the precise operation of a touch-sensitive display screen (20), whereby the stylus (1)
- is designed for the purpose of controlling functions of the computer (2) by means of touching the display screen (20),
- comprises an oblong housing (10), which is designed in such a way that the stylus (1) is provided to be held in one hand like a pen, and
- comprises a tip (11), which is designed for touching the display screen (20),
whereby the computer (2) comprises a receptacle (21) for the stylus (1),
**characterized in that**
- the stylus (1) comprises a laser distance meter (30) integrated into the housing (10) for measuring distances to spatial points (6) along an emission direction,
- the computer (2) and the stylus (1) are designed for transmitting (50) data about measured distances from the stylus (1) to the computer (2) via radio, and
- the computer system (5) is configured for the purpose of providing a first and a second distance measuring mode as selectable at the stylus (1), when it is located in the receptacle (21),
wherein
- upon selection of the first distance measuring mode, upon triggering of a distance measurement, a distance from a first housing edge of the computer (2) to a spatial point is measured by means of the distance meter of the stylus (1), and
- upon selection of the second distance measuring mode, upon triggering of a distance measurement, a distance from a second housing edge, which is opposite to the first housing edge, of the computer (2) to a spatial point is measured by means of the distance meter of the stylus (1), and
- the computer (2) comprises at least one switch for triggering a distance measurement, in particular wherein the switch is located on the housing of the computer or the display screen (20) provides a virtual switch.

2. Computer system (5) according to Claim 1,
**characterized in that**
the housing (10) comprises a gripping region for at least thumb and index finger, and in particular also middle finger, of a user.

3. Computer system (5) according to Claim 1 or Claim 2,
**characterized in that**
the housing (10) of the stylus (1) defines a housing longitudinal axis (9), and the emission direction is parallel to the housing longitudinal axis (9), wherein the tip (11) is located at a first end of the housing (10) .

4. Computer system (5) according to Claim 3,
**characterized in that**
wherein the laser distance meter (30) is positioned and designed for the purpose of emitting a laser beam (7) at the first end of the housing in the emission direction.

5. Computer system (5) according to Claim 3,
**characterized in that**
wherein the laser distance meter (30) is positioned and designed for the purpose of emitting a laser beam (7) at a second end of the housing (10) in the emission direction.

6. Computer system (5) according to any one of the preceding claims,
**characterized in that**
the stylus (1) comprises an analysis unit (16), which is designed for deriving and providing measured distances.

7. Computer system (5) according to any one of the preceding claims,
**characterized in that**
the stylus (1) comprises an inertial measuring unit (17), comprising acceleration sensors and rotation rate sensors, wherein the inertial measuring unit (17) is designed for the purpose of acquiring movements of the stylus (1) between a first distance measurement and a second distance measurement of the laser distance meter (30), in particular in six degrees of freedom, in particular wherein the stylus (1) comprises an analysis unit (16), which is designed for deriving and providing measured distances, and also
- for deriving and providing acquired movements of the stylus (1),
- for deriving poses of the stylus (1) based on the acquired movements,
- for computing and providing a distance between two spatial points measured by the first and the second distance measurement, and/or
- for computing and providing positions in a three-dimensional local coordinate system.

8. Computer system (5) according to any one of the preceding claims,
**characterized in that**
the stylus (1) comprises a display unit (12) for displaying measured distances, in particular in the form of an OLED display.

9. Computer system (5) according to any one of the preceding claims,
**characterized in that**
the stylus (1) comprises a camera unit integrated into the housing (10) for recording images in the direction of the emission direction.

10. Computer system (5) according to any one of the preceding claims,
**characterized in that**
the tip (11) and the housing (10) of the stylus (1) are conductive and are designed in such a way that the stylus (1) is capable of operating a display screen (20) designed as a capacitive touchscreen.

11. Computer system (5) according to any one of claims 1 to 9,
**characterized in that**
the stylus (1) comprises a coil and is capable of operating a display screen (20) designed as an inductive touchscreen.

12. Computer system (5) according to according to any one of the preceding claims,
**characterized in that**
the computer (2) is designed as handheld, wherein the display screen (20) is integrated into a housing of the computer (2), in particular wherein the computer (2) is designed as a smart phone or tablet PC.

13. Computer system (5) according to according to any one of the preceding claims,
**characterized in that**
the computer (2) and the stylus (1) are designed for mutually transmitting (50) instructions via radio, wherein
- the housing of the stylus (1) comprises a support region for the stable support of the stylus on a surface, in particular a magnetic support region for fixing the stylus on magnetic surfaces, and
- the display screen provides a virtual switch for triggering a distance measurement.

14. Computer system (5) according to according to any one of the preceding claims,
**characterized in that**
- the stylus (1) comprises a camera unit for recording images,
- the computer (2) and the stylus (1) are designed for transmitting (50) image data of images recorded by the camera unit from the stylus (1) to the computer (2) via radio, and
- the computer system (5) is configured for the purpose of displaying recorded image data as images on the display screen.

15. Computer system (5) according to according to any one of the preceding claims,
**characterized in that**
the stylus (1) comprises a haptic feedback module, and the computer system (5) is configured for the purpose of signaling in a haptic manner a successful transmission (50) of data relating to a measured distance from the stylus (1) to the computer (2) via radio by means of the haptic feedback module.

## Revendications

1. Système informatique (5) présentant un ordinateur (2) avec un écran tactile (20) et un crayon de saisie pouvant être tenu à la main (1) pour le contrôle précis de l'écran tactile (20), le crayon de saisie (1)
- étant conçu pour commander des fonctions de l'ordinateur (2) en touchant l'écran,
- présentant un boîtier allongé (10) qui est conçu tel que le crayon de saisie (1) est prévu pour être tenu d'une seule main à la manière d'un crayon et
- présentant une pointe qui est conçu pour toucher l'écran (20),
cependant que l'ordinateur (2) présente un logement (21) pour le crayon de saisie (1),
**caractérisé en ce que**
- le crayon de saisie (1) présente un télémètre (30) intégré au boîtier (10) pour mesurer des distances avec des points dans l'espace (6) le long d'un sens d'émission,
- l'ordinateur (2) et le crayon de saisie (1) sont configurés pour la transmission (50) par radio de données sur des distances mesurées par le crayon de saisie (1) à l'ordinateur (2) et
- le système informatique (5) est configuré pour mettre à disposition au crayon de saisie (1), lorsque celui-ci se trouve dans le logement (21), un premier et un second mode de mesure de distance de manière pouvant être sélectionnée,
cependant que
- lors de la sélection du premier mode de mesure de distance, lors du déclenchement d'une mesure de distance, une distance d'une première arête du boîtier de l'ordinateur (2) avec un point de l'espace est mesurée au moyen du télémètre du crayon de saisie (1) et
- lors de la sélection du second mode de mesure de distance, lors du déclenchement d'une mesure de distance, une distance d'une seconde arête du boîtier de l'ordinateur (2), opposée à la première arête du boîtier, avec un point de l'espace est mesurée au moyen du télémètre du crayon de saisie (1) et
- l'ordinateur (2) présente au moins un commutateur pour déclencher une mesure de distance, en particulier cependant que le commutateur se trouve sur le boîtier de l'ordinateur ou l'écran (20) met à disposition un commutateur virtuel.

2. Système informatique (5) selon la revendication 1, cependant que le boîtier (10) du crayon de saisie (1) présente une zone de préhension pour au moins le pouce et l'index ainsi qu'en particulier aussi le majeur d'un utilisateur.

3. Système informatique (5) selon la revendication 1 ou 2, cependant que le boîtier (10) du crayon de saisie (1) définit un axe longitudinal du boîtier (9) et le sens d'émission est parallèle à l'axe longitudinal du boîtier (9), cependant que la pointe (11) se trouve à une première extrémité du boîtier (10).

4. Système informatique (5) selon la revendication 3, cependant que le télémètre est positionné et conçu pour émettre un rayon laser (7) à la première extrémité du boîtier dans le sens de l'émission.

5. Système informatique (5) selon la revendication 3, cependant que le télémètre est positionné et conçu pour émettre un rayon laser (7) à la seconde extrémité du boîtier dans le sens de l'émission.

6. Système informatique (5) selon l'une des revendications précédentes, le crayon de saisie (1) présentant une unité d'analyse (16) qui est conçue pour dériver et mettre à disposition des distances mesurées.

7. Système informatique (5) selon l'une des revendications précédentes, le crayon de saisie (1) présentant une unité de mesure inertielle (17), présentant des capteurs d'accélération et des capteurs de vitesse de rotation, cependant que l'unité de mesure inertielle (17) est conçue pour détecter des mouvements du crayon de saisie (1) entre une première mesure de distance et une seconde mesure de distance du télémètre (30), en particulier dans six degrés de liberté, en particulier le crayon de saisie (1) présentant une unité d'analyse (16) qui est conçue pour dériver et mettre à disposition des distances mesurées ainsi que
- pour dériver et mettre à disposition des mouvements détectés du crayon de saisie (1),
- pour dériver des poses du crayon de saisie (1) sur la base des mouvements détectés,
- pour calculer et mettre à disposition une distance entre deux points dans l'espace mesurés par la première et la seconde mesure de distance et/ou
- pour calculer et mettre à disposition des positions dans un système de coordonnées locales tridimensionnelles.

8. Système informatique (5) selon l'une des revendications précédentes, le crayon de saisie (1) présentant une unité d'affichage (12) pour l'affichage de distances mesurées, en particulier sous forme d'un affichage OLED.

9. Système informatique (5) selon l'une des revendications précédentes, le crayon de saisie (1) présentant une unité de caméra intégrée au boîtier (10) pour prendre des images dans la direction du sens d'émission.

10. Système informatique (5) selon l'une des revendications précédentes, la pointe (11) et le boîtier (10) du crayon de saisie (1) étant conçus conducteurs et tels que le crayon de saisie (1) est approprié pour faire fonctionner un écran (20) configuré comme un écran tactile capacitif.

11. Système informatique (5) selon l'une des revendications 1 à 9, le crayon de saisie (1) présentant une bobine et étant approprié pour faire fonctionner un écran (20) conçu comme un écran tactile inductif.

12. Système informatique (5) selon l'une des revendications précédentes, l'ordinateur (2) étant conçu pouvant être tenu à la main, l'écran (20) étant intégré dans un boîtier de l'ordinateur (2), en particulier cependant que l'ordinateur (2) est conçu comme un smartphone ou une tablette.

13. Système informatique (5) selon l'une des revendications précédentes, l'ordinateur (2) et le crayon de saisie (1) étant conçus pour la transmission mutuelle d'instructions par radio, cependant que
- le boîtier du crayon de saisie (1) présente une zone d'appui pour l'appui stable du crayon sur une surface, en particulier une zone d'appui magnétique pour fixer le crayon de saisie sur des surfaces magnétiques et
- l'écran met à disposition un commutateur virtuel pour déclencher une mesure de distance.

14. Système informatique (5) selon l'une des revendications précédentes, cependant que
- le crayon de saisie (1) présente une unité de caméra intégrée au boîtier (10) pour prendre des images,
- l'ordinateur (2) et le crayon de saisie (1) sont configurés pour la transmission (50) par radio de données d'images prises par l'unité de caméra du crayon de saisie (1) à l'ordinateur (2) et
- le système informatique (5) est configuré pour représenter des données d'image comme images sur l'écran.

15. Système informatique (5) selon l'une des revendications précédentes, cependant que le crayon de saisie (1) présente un module haptique de retour d'informations et le système informatique (5) est configuré pour signaliser de manière haptique une transmission réussie (1) à l'ordinateur par radio au moyen du module haptique de retour d'informations.
